(19) **Europäisches Patentamt**
**European Patent Office**
**Office européen des brevets**

(11) **EP 3 980 630 B1**

(12) **EUROPEAN PATENT SPECIFICATION**

(45) Date of publication and mention
of the grant of the patent:
**03.12.2025 Bulletin 2025/49**

(21) Application number: **20732522.6**

(22) Date of filing: **05.06.2020**

(51) International Patent Classification (IPC):
***F01N 3/20*** *(2006.01)* ***F01N 11/00*** *(2006.01)*

(52) Cooperative Patent Classification (CPC):
**F01N 3/208; F01N 3/2066; F01N 11/00;**
F01N 2610/02; F01N 2610/144; F01N 2900/1808;
Y02A 50/20; Y02T 10/12; Y02T 10/40

(86) International application number:
**PCT/EP2020/065725**

(87) International publication number:
**WO 2020/245428 (10.12.2020 Gazette 2020/50)**

(54) **A METHOD OF DIAGNOSING A DIESEL EXHAUST FLUID DELIVERY SYSTEM**

VERFAHREN ZUR DIAGNOSE EINES DIESELABGASFLÜSSIGKEITSZUFUHRSYSTEMS

PROCÉDÉ DE DIAGNOSTIC D'UN SYSTÈME DE DISTRIBUTION DE FLUIDE D'ÉCHAPPEMENT DIESEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.06.2019 GB 201908033**

(43) Date of publication of application:
**13.04.2022 Bulletin 2022/15**

(73) Proprietor: **PHINIA Delphi Luxembourg SARL
4367 Belvaux (LU)**

(72) Inventors:
• **SYKES, Martin, A.**
**Rainham Kent ME8 0HY (GB)**
• **COSTER, Simon**
**Hollingbourne Kent ME17 1XD (GB)**

(74) Representative: **Keltie LLP
No. 1 London Bridge
London SE1 9BA (GB)**

(56) References cited:
EP-A1- 3 156 620          DE-A1- 102011 103 272
DE-A1- 102013 218 897     DE-B3- 102016 212 263

**Description**

TECHNICAL FIELD

The present invention relates to a method of diagnosing a physical parameter of a diesel exhaust fluid delivery system. The invention also relates to a controller for diagnosing a physical parameter in a diesel exhaust fluid delivery system and to a diesel exhaust fluid delivery system comprising a controller and a diesel exhaust fluid injector.

BACKGROUND

It is known to provide fluid delivery systems for conveying Diesel Exhaust Fluid (DEF) into an exhaust after-treatment system of a vehicle. DEF is a non-toxic fluid composed of purified water and automotive grade aqueous urea. The DEF is used by the exhaust after-treatment system to break down NOx gases which are produced upstream during combustion, thereby maintaining the vehicle NOx emissions below regulated levels.

DEF is typically injected, or sprayed, into the vehicle exhaust stream by an injector which is located upstream from a selective catalytic reduction (SCR) system. A pump is provided to pump DEF from a source tank to the injector via a feed line. The DEF pump is controlled in such a way as to maintain a regular supply of DEF to the injector. The injected DEF decomposes in the catalyst of the SCR system into ammonia and carbon dioxide. The ammonia then reacts with NOx in the exhaust gases to form nitrogen and water. The catalytic reaction that occurs within the SCR system thereby helps to reduce the level of NOx in the vehicle's emissions.

It is known to use monitoring systems to provide an indication of how the DEF delivery system is functioning. The performance of the DEF delivery system is affected by the age of the DEF delivery system and by changes in the environmental conditions (i.e. the ambient air temperature and/or pressure) in which the vehicle is operating. The DEF delivery system is also affected by the concentration and quality of the DEF. Changes in the temperature and/or pressure of the DEF in the DEF delivery system will result in corresponding changes to the fluid density of the DEF. Alternatively, a vehicle user may deliberately add water to the DEF source, diluting the urea concentration and thereby altering the fluid properties of the resulting DEF solution.

Providing sensors which can directly monitor the temperature and/or fluid density of the DEF flowing through the DEF delivery system is a significant challenge, since the injector and the feed line are routinely subjected to high temperatures due to their proximity to the vehicle exhaust system.

Consequently, systems which monitor the temperature and/or fluid density of the DEF in a delivery system are typically arranged to monitor the DEF in the source tank, which can, for example, be used to approximate an estimated parameter of the DEF in the feed line of the delivery system.

However, the environmental conditions in the source tank are significantly different to those experienced by the DEF as it passes through the delivery system, which makes it difficult for the monitoring system to provide a reliable estimate of the physical parameters of the DEF being injected into the exhaust system.

Therefore, such DEF delivery monitoring systems are unable to accurately determine whether the DEF in the DEF delivery system is within acceptable physical limits, or even to determine how the physical characteristics of the DEF change over time.

It is an aim of the present invention to address the disadvantages associated with the known DEF delivery monitoring systems. Relevant prior art is document DE102016212263 B3.

SUMMARY OF INVENTION

According to an embodiment of the invention there is provided a method of diagnosing a physical parameter of diesel emission fluid (DEF) in a DEF delivery system according to independent claim 1.

The method according to the present invention is able to provide an accurate indication of the physical characteristics of the DEF passing through the conduit of the DEF delivery system, as opposed to characteristics of DEF in the source of DEF as in prior art arrangements. The indication can be determined without requiring a separate fluid density or temperature sensor to be provided within the DEF delivery system. Such sensors are expensive and/or difficult to accommodate in a DEF delivery system and, in particular, within the fluid conduit assembly.

Furthermore, the indication provides more accurate diagnostic information regarding the quality and composition of the DEF that may be injected into the vehicle exhaust system, which enables the DEF delivery system to be controlled more effectively, potentially increasing the operating efficiency of the DEF delivery system.

The indication of the physical parameter of the DEF may be used as part of a method to diagnose the operating efficiency of the DEF delivery system. For example, a discrete diagnostic method may be used to determine whether the injector is operating in a sub-optimal condition. Such a determination could imply that the DEF system needs to be cleaned or serviced so as to prevent the accumulation of unwanted foreign elements in the delivery system that may otherwise be introduced into the exhaust system of the vehicle. The output from the method according to the present invention may be utilised in order to indicate whether any detected changes in the injector's performance are due to a change in the physical parameter of the DEF in the DEF delivery system. In this way, the indication which is provided by the method of the present invention may be used to prevent unnecessary maintenance being performed on the DEF delivery system. Conversely, the indication from the present invention may also be used to provide an early determination that the DEF system needs to be examined or serviced.

The method comprises receiving the second input signal from a pressure sensor of a pump assembly of the DEF delivery system, the pump assembly being arranged to pump DEF from the DEF source into the conduit. The first input signal may comprise information relating to the operation of the injector.

The method step of determining the wave propagation time may comprise the steps of determining the timing of an injection of DEF into the vehicle exhaust after-treatment system by the injector based on the first input signal; and, determining when the resulting pressure wave will arrive at the first location following the operation of the injector based on a pre-determined calibration value.

The first input signal may comprise information relating to a pressure sensor arranged at the first location along the conduit. The first location may be located upstream from the injector.

The step of diagnosing the physical parameter of the DEF in the delivery system may comprise determining the fluid density value of the DEF in the conduit based on the determined wave propagation time. Accordingly, the physical parameter of the DEF in the delivery system may be defined as the fluid density of the DEF in the conduit. Furthermore, the physical properties of the conduit may also be used to determine the DEF fluid density.

The step of diagnosing the physical parameter of the DEF in the delivery system may comprise determining the temperature of the DEF in the conduit based on the determined fluid density value. For example the temperature of the DEF in the conduit may be determined based on a predefined relationship between the fluid density and the temperature of the DEF, which may be expressed as an equation and/or a look-up table.

Accordingly, the physical parameter of the DEF in the delivery system may be defined as the temperature of the DEF in the conduit. The method thereby provides a convenient means of determining the temperature of the DEF as it passes through the conduit, without the need for additional temperature sensors to be installed within the DEF delivery system.

The method may comprise diagnosing the physical parameter of the DEF based on a physical parameter of the conduit.

The physical parameter of the conduit may relate to at least one of a diameter, a wall thickness and a Young's modulus of the conduit.

The method may comprise diagnosing the physical parameter of the DEF based on the bulk modulus of the DEF in the DEF delivery system.

The invention also extends to a controller that is arranged to control a DEF delivery system according to independent claim 8.

The controller is arranged to perform the method of the above aspect.

According to a further aspect of the present invention, there is provided a DEF delivery system controller for diagnosing a physical parameter of DEF in a DEF delivery system, the system comprising an injector for injecting DEF into a vehicle exhaust after-treatment system and a conduit which connects the injector to a source of DEF, the controller comprising: a first input arranged to receive a first input signal indicative of a pressure wave being at a first location in the conduit, the pressure wave resulting from the operation of the injector; a second input arranged to receive a second input signal indicative of the pressure wave being at a second location in the conduit which is downstream from the first location; a determination module arranged to determine a wave propagation time indicative of the time it takes for the pressure wave to propagate from the first location to the second location; a diagnostic module arranged to determine a physical parameter of the DEF in the delivery system based on the wave propagation time; and, an output arranged to output a diagnostic signal based on the DEF physical parameter.

A controller according to the preceding paragraph may be provided in combination with a pressure sensing means for providing the input signal to the controller. The input of the controller may be configured to receive an input signal comprising pressure sensor information associated with the pressure of DEF flowing within the conduit that connects the DEF source to the injector.

The controller may further comprise a command module arranged to determine a command signal for controlling the injector based on the determined physical parameter, and an output arranged to output the command signal to the injector. The command module may control the operation of the injector in order to compensate for sub-optimal operation of other elements of the DEF delivery system by adjusting the output of the DEF into the exhaust system. The controller may also be arranged to output a command signal for controlling the operation of other components of the DEF delivery system, including a feed line pump, for example.

According to a further aspect of the present invention, there is provided a DEF delivery system comprising an injector and a controller according to any one of the preceding paragraphs.

It will be appreciated that the foregoing represents only some of the possibilities with respect to the particular subsystems of a DEF delivery system which may be included, as well as the arrangement of those subsystems with the controller. Accordingly, it will be further appreciated that embodiments of a DEF delivery system which include other or additional subsystems and subsystem arrangements remain within the scope of the present invention. Additional subsystems may include, for example, systems relating to the operation of a vehicle exhaust system.

The set of instructions (or method steps) described above may be embedded in a computer-readable storage medium (e.g. a non-transitory storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM ad EEPROM); flash memory; or electrical or other types of medium for storing such information/instructions.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

BRIEF DESCRIPTION OF THE DRAWINGS

One or more embodiments of the invention will now be described, by way of example only, with reference to the accompanying drawings, in which:

**Figure 1** illustrates a DEF delivery system and its connection to a vehicle exhaust apparatus suitable for use with embodiments of the present invention;

**Figure 2** is a graph showing the change in DEF pressure in a feed line of the DEF delivery system of Figure 1 resulting from an injection of DEF into the vehicle exhaust apparatus;

**Figure 3** illustrates a controller for diagnosing the DEF delivery system according to an embodiment of the invention;

**Figure 4** is a flow chart showing the method steps of a method suitable for diagnosing a physical parameter of DEF in the DEF delivery system according to Figure 1;

**Figure 5** illustrates a DEF delivery system in connection with a vehicle exhaust apparatus suitable for use with an alternative embodiment of the invention;

**Figure 6** is a graph showing the change in DEF pressure in a feed line of the DEF delivery system of Figure 5 resulting from an injection of DEF into a vehicle exhaust apparatus; and

**Figure 7** is a flow chart showing the method steps of a method suitable for diagnosing a physical parameter of DEF in the DEF delivery system according to Figure 5.

DETAILED DESCRIPTION

In the following detailed description, reference is made to the accompanying drawings which form a part hereof, and which illustrate specific embodiments of the invention. These embodiments are described in sufficient detail to enable those of ordinary skill in the art to make and use them.

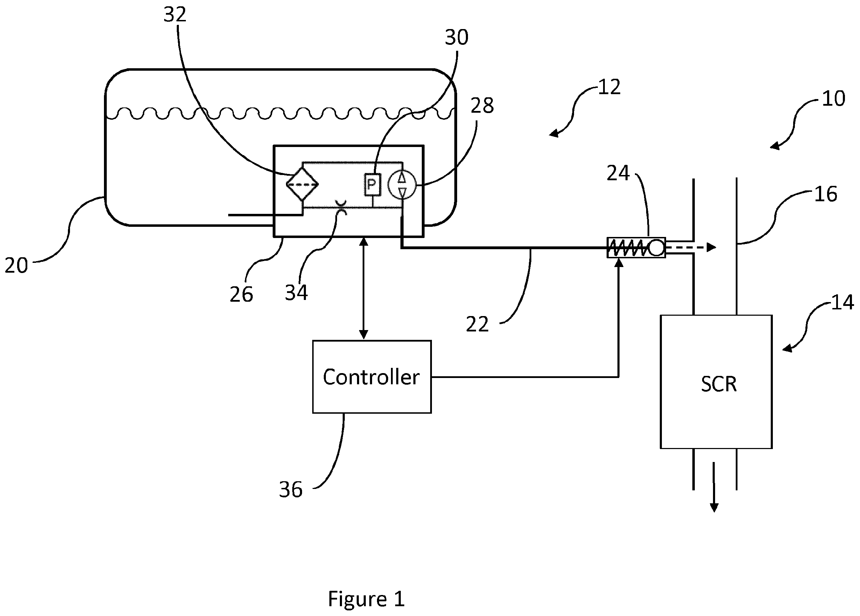

Figure 1 illustrates the basic architecture of a vehicle exhaust after-treatment system 10 configured for operation with a diesel internal combustion engine (not shown). The after-treatment system comprises a diesel exhaust fluid (DEF) delivery system 12 which is arranged to deliver DEF to a selective catalytic reduction (SCR) system 14 of the exhaust after-treatment system 10.

The vehicle exhaust after-treatment system 10 is connected to the engine and provides a conduit through which the engine's exhaust gasses are expelled from a vehicle. In this way, the vehicle exhaust after-treatment system 10 is fluidly connected to the engine. The exhaust after-treatment system 10 includes an exhaust pipe 16 comprising a section containing the SCR system 14. The SCR system 14 is arranged to catalyse a reaction between the DEF, which is supplied to the SCR system 14 by the DEF delivery system 12, and the engine exhaust gases which flow through the SCR system 14 from the engine.

Diesel Exhaust Fluid (DEF) is a non-toxic fluid composed of purified water and automotive grade aqueous urea. DEF typically comprises an aqueous urea solution made with 32.5% urea and 67.5% deionized water. During operation of the exhaust after-treatment system 10, the DEF breaks down in the exhaust pipe into ammonia and carbon dioxide before entering the catalyst of the SCR system 14. A reaction between the ammonia and NOx in the exhaust gases is catalysed by the catalyst in order to form nitrogen and water, thereby reducing the levels of NOx that are subsequently exhausted from the vehicle.

The DEF delivery system 12 includes a source of DEF in the form of a tank 20, a feed line 22 and an injector 24. The tank 20 is fluidly connected to the injector 24 via the feed line 22, the injector 24 in turn being fluidly connected to the exhaust pipe 16. The delivery system 12 also includes a pump assembly 26 comprising a hydraulic pump 28, which is arranged to draw DEF from the source tank 20 into the feed line 22 to supply DEF to the injector 24, as will be explained in more detail below.

The hydraulic pump 28 is configured to operate in a forwards and a backwards direction such that it is able to pump DEF from the tank 20 into the feed line 22 and vice versa. In this way, the pump 28 is able to supply DEF into the feed line 22, which increases the pressure of the DEF in the feed line 22.

The pump 28 is also arranged to return DEF from the feed line 22 to the tank 20, which thereby reduces the DEF pressure in the feed line 22. The pump 28 may be controlled to remove the DEF from the feed line 22, and the injector 24, during shutdown of the DEF delivery system 12 in order to prevent the DEF from freezing when the DEF delivery system 12 is not in use.

A filter 32 is arranged upstream from the pump 28. The filter 32 is arranged to prevent any solid particles in the DEF from being passed downstream to the pump 28, the feed line 22 and the injector 24.

The pump 28 is further connected to a return line 34 which provides a secondary connection to the source tank 20. The return line 34 includes an orifice which prevents fluid from passing through the return line 34 below a given threshold pressure value. In this way, the return line 34 operates as a pressure release mechanism which allows excess DEF to be returned to the source tank 20, rather than being transmitted to the feed line 22.

The pump assembly 26 further comprises a pressure sensor 30 which is fluidly connected to the feed line 22 and the pump 28. In the illustrative system shown in Figure 1, the pressure sensor 30 is shown as being located downstream from the filter 32. However, it will be appreciated by the skilled person that is it known to position the pressure sensor in a number of alternative ways, all of which may be used in embodiments of the present invention. For example, the pressure sensor 30 could be arranged at a location of the feed line 22 which is upstream from the filter 32.

The pressure sensor 30 is arranged to measure the pressure of the DEF in the feed line 22 of the DEF delivery system 12. In particular, the pressure sensor 30 acts as a transducer, generating an electrical signal as a function of the pressure imposed upon the sensor 30 by the DEF in the feed line 22, which signal is therefore indicative of the DEF pressure in the feed line 22.

The feed line 22 comprises a tube, or pipe, which is fluidly connected to the pump assembly 26 at one end. Another end of the feed line 22 is connected to the injector 24. The feed line 22 thereby forms a conduit between the DEF source (i.e. the tank 20) and the injector 24. The feed line 22 includes a covering (not shown) that insulates the tube in order to maintain the DEF within a pre-determined range of temperatures and pressures. The covering may be electrically heated as would be understood by a person skilled in the art.

The tank 20 is arranged in fluid connection with the pump assembly 26 to allow DEF to be pumped to, and from, the injector 24 via the feed line 22. The DEF which is stored in the tank 20 can be periodically refilled by the vehicle operator via an access tube (not shown).

The rate at which the DEF needs replacing depends on the operating conditions of the vehicle. The relevant vehicle operating conditions may include the distance travelled by the vehicle and/or the vehicle loading parameters. For small vehicles, a typical DEF refill interval occurs around the time of a recommended engine oil change. During operation of the DEF delivery system 12, the injector 24 is operable to deliver DEF to the SCR system 14 in order to nullify the NOx which is produced by the engine.

The injector 24, or doser, comprises an injector body which is arranged in fluid communication with the exhaust pipe 16 of the exhaust after-treatment system 10. The injector body has a fluid inlet for receiving DEF from the feed line 22. The injector body also comprises a fluid outlet which is arranged to deliver DEF into the exhaust pipe 16 upstream of the SCR system 14. The injector 24 also includes a valve that opens and closes under the influence of a valve actuator, as would be readily understood by the skilled person. In particular, the valve actuator includes a solenoid mechanism which opens and closes the injector valve when electrically energized and de-energized respectively.

The DEF is housed in the feed line 22 under pressure such that, when the valve is opened by the valve actuator, the DEF is urged through the fluid outlet of the injector body and out into the exhaust pipe 16. The fluid outlet is located at a position which is upstream from the SCR catalyst 14 such that the DEF, when injected into the exhaust pipe 16, is delivered to the catalyst by the stream of exhaust gases that flow through the exhaust pipe 16 from the engine.

As shown in Figure 1, the pump assembly 26 and the injector 24 are each electronically connected to a controller 36 of the DEF delivery system 12. The controller 36 is operable as a command and control interface between the various components of the DEF delivery system 12. In this way, the controller 36 forms part of a central control system of the DEF delivery system 12. It will be appreciated by the skilled person that the controller 36 may be incorporated into any number of computer based control systems of the vehicle, such as an engine control unit (ECU), for example.

The controller 36 is arranged to control the operation of the pump assembly 26 and the injector 24 to convey DEF to the exhaust after-treatment system 10 during operation of the engine. To achieve this, the controller 36 comprises a computer system for carrying out suitably prescribed processes and strategies.

During operation of the DEF delivery system 12, the controller 36 is arranged to control the operation of the injector 24 according to an injector control strategy, as will now be explained in more detail. The injector control strategy commences with the controller 36 receiving a signal which is indicative of a demand for DEF to be delivered into the engine exhaust stream. The DEF demand signal includes information relating to an operating parameter of the engine. The engine operating parameter may include, for example, an engine speed and/or throttle position, as would be understood by the skilled person.

An increase in the engine speed results in a corresponding increase in the output of exhaust (including NOx) gases from the engine. Thus, an increase in the engine's speed corresponds to the controller 36 receiving a DEF demand signal which is indicative of a need for more DEF to be delivered to the SCR system 14 of the exhaust after-treatment delivery system 10. Accordingly, the increased demand for DEF corresponds with the need to nullify the increased levels of NOx that are present in the exhaust gases.

The controller 36 is arranged to control the injector 24 in dependence on the DEF demand by activating the injector 24 to control delivery of DEF to the SCR system 14. Upon receiving the DEF demand signal, the controller 36 determines an injector command signal which is then outputted to the injector 24 in order to control the delivery of DEF into the exhaust pipe 16. In particular, the injector command signal is arranged to control the valve actuator of the injector 24, which activates the injector valve for a given time period, thereby releasing a flow of pressurised DEF from the feed line 22.

The injector command signal comprises instructions to control the valve actuator to operate the valve at a determined frequency and for a determined time period. Consequently, the actuator is configured to actuate the injector valve to open and close at the pre-determined operating frequency, and for a pre-determined time period. During normal operation, the controller 36 is arranged to adjust the injection frequency injection (time) period and/or frequency values in dependence on the DEF demand it receives from the engine. For a typical injector activation event, the controller 36 controls the valve actuator to operate the injector valve at a frequency of 4Hz for an activation period of up to 250 milliseconds (ms).

As DEF is injected from the feed line 22 into the exhaust pipe 16 it causes a reduction in the pressure of the DEF in the feed line 22. The reduction in DEF pressure is related to the volume of DEF that is injected into the exhaust pipe 16 by the injector 24. The pressure of DEF in the feed line 22 must be maintained within a pre-determined range in order to enable the injector 24 to effectively deliver DEF into the exhaust pipe 16 during the subsequent activation of the injector 24.

The controller 26 is arranged to control the pump assembly 26 according to a pump control strategy, in order to maintain the DEF pressure in the feed line 22. For example, the pump assembly 26 may be arranged to work in co-operation with the controller 36 as a closed loop control system in order to maintain the DEF in the feed line 22 within a determined range of pressure values. In particular, the controller 36 is able to automatically control the flow of DEF into the feed line (i.e. in a forward flow direction), in order to maintain the DEF pressure within the desired range. It will be appreciated by the skilled person that the controller 36 is also able to automatically control the flow of DEF out of the feed line (i.e. in a reverse flow direction), for example during shutdown of the DEF delivery system 12.

The above described pump and injector control strategies are optimised to control the DEF delivery system 12 within a pre-defined range of environmental conditions (i.e. ambient temperature and pressure). However, the operating efficiency of the DEF delivery system 12 is affected by the concentration, composition and/or quality of the DEF, which are influenced by even small changes in environmental conditions. Changes in the temperature and/or pressure of the DEF in the DEF delivery system 12 will result in a corresponding change in the fluid density of the DEF. A vehicle user may also cause a change in the DEF properties by deliberately adding water to the DEF source, which dilutes the urea concentration and thereby alters the fluid density of the DEF solution.

Any change in the physical parameters of the DEF can affect the amount of DEF which is delivered to the SCR system 14 of the exhaust after-treatment system 10, which can thereby impact the ability of the DEF delivery system to inhibit vehicle NOx emissions.

Accordingly, as well as controlling the operation of the DEF delivery system 12, the controller 36 is arranged to monitor the physical parameters of the DEF and to thereby determine any change in the operating efficiency of the DEF delivery system 12. In particular, the DEF is monitored so as to determine whether a sufficient flow of DEF is being delivered to the SCR system 14 of the exhaust after-treatment system 10, in order to maintain the prescribed NOx emission levels.

According to a particular embodiment of the invention, the controller 36 is further arranged to output the results of its diagnoses to a display means (not shown) which may be controlled to indicate the physical parameters of the DEF delivery system 12 to a user of the vehicle. In particular, the controller 36 is arranged to control the display means to output a series of indications to the user indicating a physical parameter of the DEF in the feed line 22 of the DEF delivery system 12.

The display means comprises any suitable display which is arranged to provide an indication which describes the physical parameter of the DEF in the delivery system 12. Such an indication may include graphical representations in the form of images and/or text. Alternatively, the display means may comprise a light emitting diode (LED), which is arranged to display a characteristic illumination pattern or graphic symbol.

In alternative embodiments, the output from the controller 36 may be used to calibrate the operation of the DEF delivery system 12, including either the pump assembly 26 and/or the injector 24, so as to optimise the delivery of DEF into the vehicle exhaust after-treatment system 10.

In an attempt to monitor the physical parameters of the DEF in a delivery system, known systems are typically provided with sensors arranged to directly monitor the temperature or fluid density of the DEF in the source tank 20. The information which is derived from such sensors can be used to approximate an estimated parameter of the DEF in the feed line 22 of the delivery system 12.

However, the environmental conditions in the source tank 20 are significantly different to those experienced by the DEF as it passes through the feed line 22, which makes it difficult for such known monitoring systems to provide a reliable estimate of the physical parameters of the DEF being injected into the exhaust after-treatment system 10.

Therefore, such DEF delivery monitoring systems are unable to accurately determine whether the DEF in feed line 22 is within acceptable physical limits, or even to determine how the physical characteristics of the DEF changes over time.

The controller 36 according to the present invention is arranged to address the disadvantages associated with the known monitoring systems by determining the time it takes for a pressure wave to propagate from a first location to a second location along the feed line 22 of the DEF delivery system 12. The controller 36 is configured to then diagnose a physical parameter of the DEF based on the propagation time associated with the pressure wave, as will be explained in more detail below.

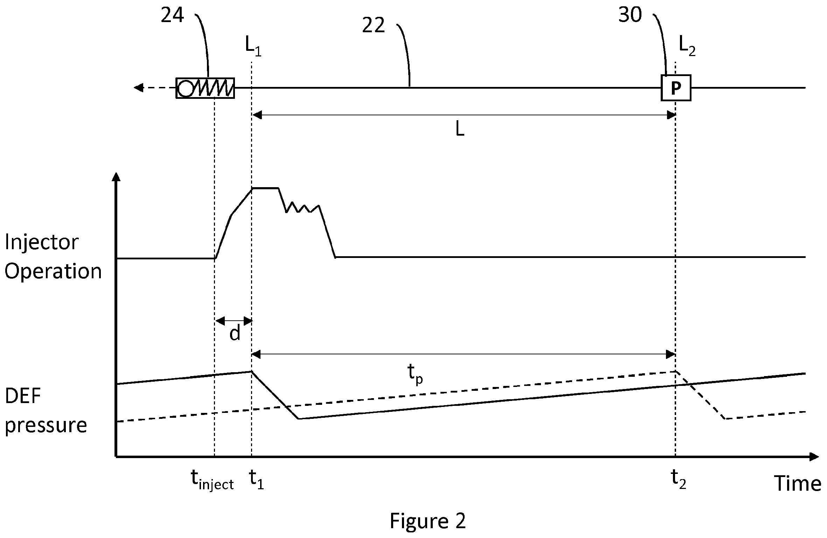

The origin of the propagating pressure wave within the feed line 22 will now be described with reference to Figure 2, which illustrates the change in pressure of DEF within the feed line 22 following an operation of the injector 24. In particular, the pressure wave is formed as a result of the sudden opening and closing of the injector 24 causing an abrupt change in the flow velocity of the DEF in the feed line 22.

An exemplary injection event is illustrated schematically in Figure 2 by the peak in the injector operation graph. The injector 24 is initiated at a time $t_{inject}$ and controlled to inject DEF into the exhaust after-treatment system 10 in dependence on receiving an injector control signal from the controller 36. The injection event produces a high pressure transient, or shock wave, that forms slightly upstream of the injector 24 at a first location $L_1$ along the feed line 22 very shortly after initiation of the injection event, at a time $t_1$. The propagation of the pressure wave is shown in Figure 2 by the transition between the solid line and the dashed line, which represent the DEF pressure at $L_1$ and $L_2$, respectively. The time it takes for the pressure wave to propagate between $L_1$ and $L_2$ is represented by $t_p$.

The pressure wave propagates against the general flow direction of the DEF to a second location $L_2$ along the feed line 22. The effective speed C of the propagating pressure wave can be determined by dividing the distance between the first and second locations $L_1, L_2$ along the feed line 22 by the wave propagation time (i.e. $t_2 - t_1$), as shown in equation E1 below.

$$C = \frac{(L_2 - L_1)}{(t_2 - t_1)} \ (ms^{-1}) \qquad\qquad (E1)$$

The effective speed C of the pressure wave is related to the physical characteristics of the feed line 22 by equation E2, below:

$$C = \sqrt{\frac{1}{\rho\left[\frac{1}{K} + \frac{D}{Ee}\right]}} \ (ms^{-1}) \qquad\qquad (E2)$$

Where $\rho$ is the fluid density of the DEF, $K$ is the bulk modulus of the DEF, $D$ is the diameter of the feed line 22, $E$ is the Young's modulus of the feed line materials and e is the wall thickness of the feed line 22. The DEF bulk modulus $K$, the wall thickness e, the Young's modulus and the diameter $D$ define physical parameters of the feed line 22, and are obtainable through standard investigative means, as would be understood by the skilled person.

Accordingly, with reference to equation E2, it is therefore possible to calculate the fluid density $\rho$ of the DEF in the feed line 22 based on the determined effective speed $C$ of a propagating pressure wave. In this way, the fluid density $\rho$ defines a determined physical parameter of the DEF in the DEF delivery system 12.

The fluid density of the DEF in the feed line 22 can change for a variety of reasons. For example, a user may accidentally (or deliberately) fill the source tank 20 with water, or some alternative solution, which will affect the fluid density of the DEF in the delivery system 12.

The fluid density of the DEF in the feed line 22 can also change as it passes through the DEF delivery system 12 due, at least in part, to the absorption and subsequent release of air into the DEF solution.

Changes in the pressure and/or temperature of the DEF within the feed line 22 can cause cavitation effects which result in the liberation of dissolved air from the DEF. The liberated air forms microscopic bubbles which, once liberated, are then suspended in the DEF, thereby reducing the effective 'density' of the DEF solution.

Air bubbles can also occur in the DEF when the source tank 20 is low or during system start up when the feed line 22 is not primed with DEF. The cavitation effects lead to a corresponding change in the effective speed of the pressure wave which propagates through the feed line 22 caused by the operation of the injector 24.

The controller 36 according to the present invention is arranged to detect and monitor any changes in the fluid density $\rho$ of the DEF by calculating the time it takes for the pressure wave to propagate from the first location $L_1$ to a second location $L_2$ along the feed line 22, which is indicative of the effective speed C of the propagating pressure wave. The controller 36 is also configured to diagnose whether there have been any changes in the fluid density $\rho$ of the DEF in the feed line 22 based on the determined propagation time of the pressure wave.

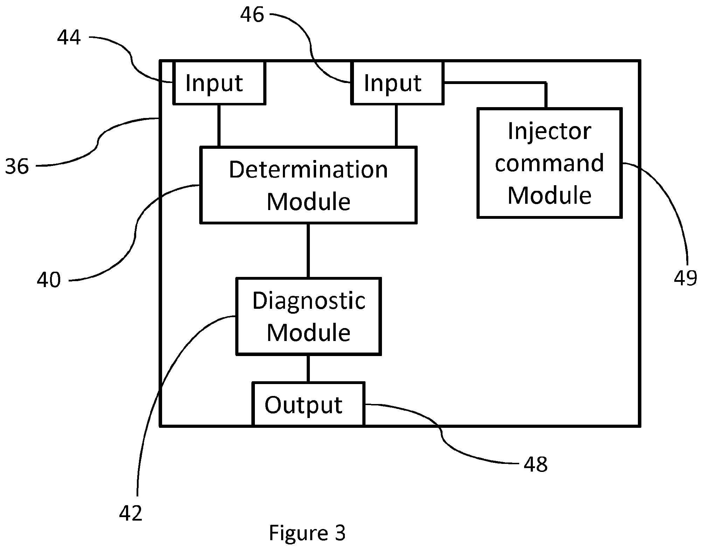

A specific configuration and operation of the controller 36, according to the present invention, will now be described with reference to Figures 2 and 3. According to this exemplary embodiment, the controller 36 comprises a number of processing modules including a determination module 40 and a diagnostic module 42, as shown in Figure 3. The controller 36 further comprises a first input 44 and a second input 46 for receiving signals, and an output 48 for emitting signals.

The controller 36 is arranged to receive, via the first input 44, a first input signal which is indicative of the pressure wave arriving at the first location $L_1$ in the feed line 22. The second input 46 is arranged to receive a second input signal which is indicative of the pressure wave arriving at the second location $L_2$.

The first input signal comprises information relating to the operation of the injector 24, such as an injector command signal. The command signal is outputted from an injector command module 49 and is arranged to control the injector 24 to inject DEF into the vehicle exhaust after-treatment system 10. Accordingly, the injector command signal is determined by the injector command module 49 in dependence on a demand to reduce NOx in the vehicle's emissions.

The controller 36 is arranged to determine the time at which the pressure wave is at $L_1$ by checking the timing of the injector initiation $t_{inject}$ and then accounting for any delay between the initiation of the injector and the formation of the wave at $L_1$. Hence, the first input signal provides an input signal which is indicative of the pressure wave being at the first location $L_1$ in the feed line 22.

Accordingly, the first and second inputs 44, 46 may be provided as a single input arranged to receive the pressure sensor information from pressure sensor 30 of the DEF delivery system 12.

The second input signal comprises pressure sensor information associated with the pressure of DEF flowing anywhere along the feed line 22 that connects the DEF source tank 20 to the injector 24. The pressure sensor information comprises measured pressure sensor data that is received directly from the pressure sensor 30 of the pump assembly 26.

The pressure sensor information may comprise a continuously varying function of pressure vs time, wherein the pressure is measured in bar and time is measured in seconds. An indication of the pressure wave passing through the second location $L_2$ of the feed line 22 may be determined by a sudden spike in the measured pressure of DEF by the pressure sensor 30. The controller 36 is arranged to detect such a spike in the received pressure sensor data and to thereby determine the time at which the pressure wave is at the second location $L_2$.

The determination module 40 of the controller is arranged to determine a wave propagation time indicative of the time it takes for the pressure wave to propagate from the first location $L_1$ to the second location $L_2$ along the feed line 22. To achieve this, the time at which the pressure wave is at $L_1$ is derived by checking the timing of injector initiation and then accounting for any delay between initiating the injector and the wave forming at $L_1$. Accordingly, the determination module 40 is arranged to first determine the timing of the DEF injection $t_{inject}$ based on the injector command information in the first input signal.

The determination module 40 is further arranged to determine when the resulting pressure wave arrives at the first location $L_1$ based on a pre-determined calibration value, which is applied to the injection time value $t_{inject}$ in order to provide an accurate indication of when the pressure wave is at the first location $L_1$ along the feed line 22. In this way, the controller 36 is arranged to account for the fact that the pressure wave is formed in the feed line 22 at some time after the injection event and at a location $L_1$ which is distanced away from the injector 24.

The calibration value corresponds to the time difference d between the initiation of the injection at $t_{inject}$ and the formation of the pressure wave at $t_1$. The calibration value is pre-determined through experimentation on a suitable testing-rig prior to the DEF delivery system 12 being installed in a vehicle. It will be appreciated that the calibration value may also be derived via computational modelling of a virtual DEF delivery system 12, as would be understood by the skilled person.

Taking account of the pre-determined calibration value d, the determination module 40 is arranged to calculate the effective speed C of the pressure wave in the feed line 22 according to equation E3, below:

$$C = \frac{(L_2 - L_1)}{(t_2 - t_{inject} + d)} = \frac{L}{t_p} \; (ms^{-1}) \qquad\qquad\qquad (E3)$$

Where L is the length between two known locations (i.e. $L_1$ and $L_2$) of the feed line 22 and $t_p$ is the time it takes for the pressure wave to propagate along the feed line 22 between the first and second locations $L_1$, $L_2$. The timing value $t_{inject}$ represents the onset of the injection caused by the injector command signal. Accordingly, the calibration value d represents an operating delay of the injector 24, which corresponds to the time between the initiation of the injector 24 and the formation of the pressure wave in the feed line 22 at location $L_1$.

Following the determination of the effective speed C of the pressure wave in the feed line 22, the diagnostic module 42 determines the fluid density $\rho$ of the DEF according to equation E2.

The controller 36 is further configured to diagnose the fluid density $\rho$ of the DEF in the feed line 22 based on the temperature of the DEF in the DEF delivery system 12. In particular, the controller 36 is arranged to receive a third input signal comprising a temperature input indicative of the temperature of DEF in the feed line 22. The diagnostic module 42 is configured to determine the fluid density $\rho$ in dependence on the third input signal and on the effective speed C of the pressure wave in the feed line 22.

The third input signal is received by the first or the second input 44, 46 of the controller 36, from a temperature sensor which is arranged to measure the temperature of the DEF in delivery system 12. The temperature sensor is arranged within the pump assembly and is fluidly connected to the feed line 22 such that it able to measure the temperature of DEF as it is pumped along the feed line 22, towards the injector 24.

In an alternative embodiment, the controller 36 is arranged to determine the temperature of the DEF in the feed line 22 based on a determined fluid density $\rho$ of the DEF in the delivery system 12. In this instance, the third input signal comprises a fluid density input indicative of the density of DEF in the feed line 22. The diagnostic module 42 is configured to determine the temperature in dependence on the third input signal and on the effective speed C of the pressure wave in the feed line 22.

The third input signal is received by the first or the second input 44, 46 of the controller 36 from a fluid density sensor of the DEF delivery system 12. The fluid density sensor is arranged within the pump assembly and is fluidly connected to the feed line 22 and is configured to measure the fluid density $\rho$ of DEF as it is pumped along the feed line 22, towards the injector 24.

According to an exemplary embodiment, the controller 36 is further arranged to determine the temperature of the DEF in the feed line 22 from the fluid density parameter value. The DEF temperature $T$ is related to the DEF fluid density $\rho$ according to a polynomial relationship, as described in equation E4 below.

$$\rho = A + BT + CT^2 \qquad\qquad\qquad (E4)$$

Where $T$ is the DEF temperature and $A$, $B$ and $C$ are constants, which are specified by the manufacturer of the DEF. According to an exemplary embodiment, the constants A, B and C are derived to take the following values: A = 1.1000, B = - 0.000428xC and C = -1.628x10$^{-06}$. Accordingly, the determination module 40 of the controller 36 is arranged to calculate the DEF temperature $T$ from the determined fluid density $\rho$, according to equation E4.

The output 48 of the controller 36 is arranged to output a diagnostic signal based on the determined DEF physical parameter. Accordingly, the output signal comprises information relating to the fluid density $\rho$ of the DEF in the feed line 22. As explained above, the output signal can be transmitted to a display means which is controlled to indicate the physical parameter of the DEF delivery system 12 to a user of the vehicle.

A particular advantage of the above described configuration is that it is able to provide a more accurate estimation of a fluid density $\rho$ of the DEF that is actually flowing through the feed line 22 of the delivery system 12 than prior art approaches that estimate the properties of DEF in the feed line based on measurements taken in the tank. Furthermore, both the first and the second input signals are derived, respectively, from an injector control module and a pressure sensor 30 of the pump assembly, which are both common components of known DEF delivery systems. The controller 36 according to the present invention thereby obviates the need to provide the delivery system 12 with additional sensors in the DEF source tank, or elsewhere in the DEF delivery system 12.

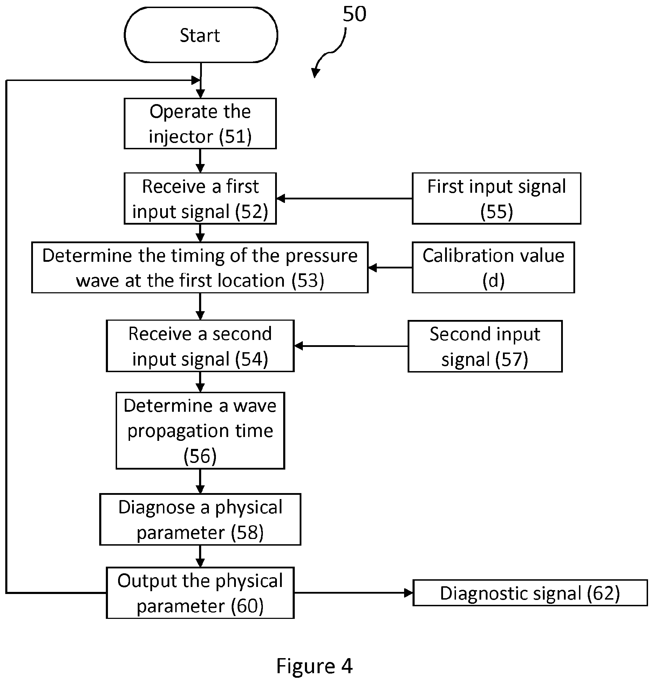

An exemplary diagnostic control strategy, as executed by the controller 36, will now be described with reference to Figure 4. The control strategy is primarily directed towards diagnosing a physical parameter of the DEF in the DEF delivery system 12. The strategy comprises a computer implemented control method 50 according to an embodiment of the invention.

In a first step 51 of the control method 50, the injector command module 49 is arranged to determine an injector control signal which is configured to operate the injector 24 to deliver DEF into the vehicle exhaust after-treatment system 10.

In a second step 52, the input 44 receives a first input signal 55 which includes information relating to the operation of the injector 24 according to the injector command signal from the previous method step.

In a third step 53, the determination module 40 evaluates the injector operation information to determine the timing of the onset of the injection $t_{inject}$. The determination module 40 uses the injection onset time $t_{inject}$ together with the predetermined calibration value d to determine the timing of the pressure wave at the first location $L_1$ of the feed line 22.

In a fourth step 54, the second input 46 receives a second input signal 57 from the pressure sensor 30 of the DEF delivery system 12, wherein the pressure sensor information contained within the second input signal 57 is indicative of the timing of the pressure wave at the second location $L_2$ of the feed line 22.

In a fifth step 56, the determination module 40 determines a wave propagation time $t_p$ by calculating the difference between the timings of the pressure wave at the first location and the second location $L_1$, $L_2$ in the feed line 22. In this way, the propagation time $t_p$ is indicative of the time it takes for the pressure wave to propagate between the first and the second locations $L_1$, $L_2$ in the feed line 22. The determination module 40 then calculates the effective speed $C$ of the pressure wave according to equation E3 above.

In a penultimate step 58, the diagnostic module 42 calculates the fluid density $\rho$ of the DEF in the feed line 22 based on the effective speed $C$ of the pressure wave, as determined with respect to the wave propagation time $t_p$.

In a final step 60, the diagnostic module 42 determines a diagnostic signal 62 which is outputted by the controller's output 42 to a display of the vehicle. The diagnostic signal 62 is based on the DEF fluid density $\rho$ parameter, which was determined in the previous method step 58.

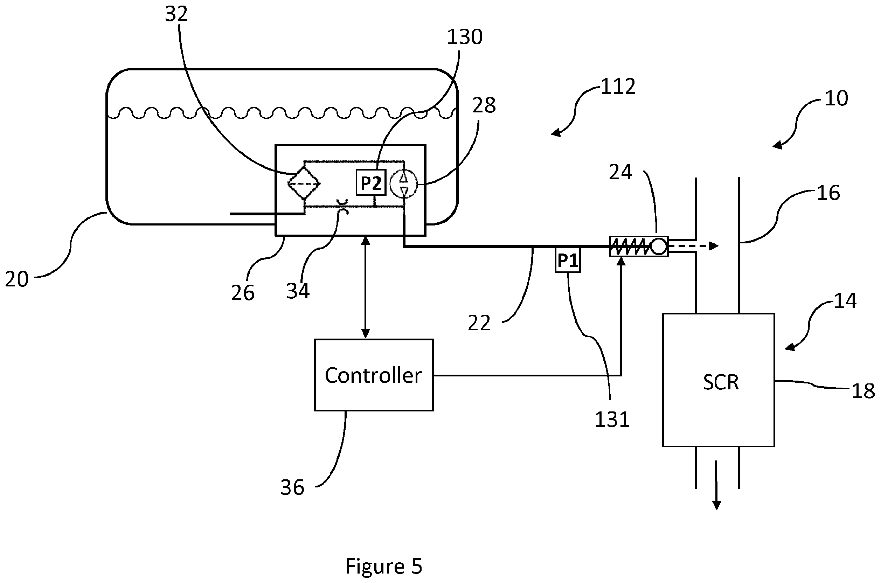

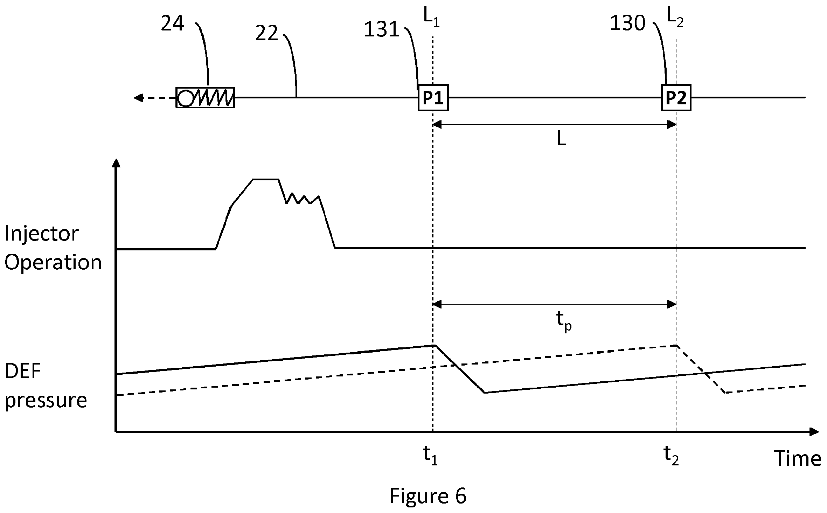

An alternative configuration and operation of the DEF delivery system 112, according to the present invention, will now be described with reference to Figures 5 and 6. According to the presently described embodiment, the DEF delivery system 112 comprises substantially the same components as the DEF delivery system 112 which was described in the exemplary embodiment shown in Figure 1.

Similarly to the previously described example, the DEF delivery system 112 is also arranged to determine a physical parameter of DEF in the delivery system based on a first and a second input signal. The first and second input signals are used to determine a propagation timing of a pressure wave which is caused to propagate along the feed line 22 due to the operation of the injector. However, in this instance, both the first and the second input signals are derived from pressure sensors which are arranged at separate locations along the feed line 22 of the delivery system 112. Therefore, the DEF delivery system 112 comprises two pressure sensors, which are both fluidly connected to the feed line 22, as shown in Figure 5.

A first pressure sensor 131 is arranged at a first location $L_1$ along the feed line 22, which is arranged upstream from the injector 24 of the delivery system. A second pressure system 130 is arranged at a second location which is arranged upstream from the location of the first pressure sensor 131.

The second pressure sensor 130 is arranged in the pump assembly 26 of the DEF delivery system 112 however, it will be appreciated by the skilled person that any one of the two pressure sensors 130, 131 could be arranged in a number of alternative suitable arrangements without diverging from the scope of the present invention.

The first and the second pressure sensors 131, 130 are each arranged to measure the pressure of the DEF in the feed line 22 of the DEF delivery system 112 at their respective locations. Each pressure sensor acts as a transducer, generating an electrical pressure signal as a function of the pressure that is imposed upon it by the DEF in the feed line 22. The resulting pressure signals are indicative of the DEF pressure at their respective locations along the feed line 22.

The controller 36 is arranged and configured in the similar manner as the controller 36 that was described previously with respect to Figure 3. However, the controller 36 according to the presently described embodiment does not require an injector command module 49 as will be explained below. Accordingly, the first input 44 is arranged to receive a first input signal from the first pressure sensor 131 and the second input 46 is arranged to receive a second input signal from the second pressure sensor 130.

With particular reference to Figure 6, the first input signal contains pressure sensor information relating to the pressure of the DEF at a first location $L_1$ in the feed line 22, whilst the second input signal comprises pressure sensor information which is indicative of the pressure of the DEF at the second location $L_2$. Propagation of the pressure wave is shown in Figure 6 by the transition between the solid line and the dashed line, which represent the DEF pressure at $L_1$ and $L_2$, respectively. The time it takes for the pressure wave to propagate between $L_1$ and $L_2$ is represented by $t_p$.

According to the present embodiment, the first location $L_1$ may be defined at any point along the feed line 22 which is downstream from the second location $L_2$, and is generally determined by the positioning of the corresponding pressure sensor (P1). This is in contrast to the embodiment as described with Figure 2, in which the first location $L_1$ defines a position at which the pressure wave forms along the feed line 22.

The determination module 40 is arranged to determine a wave propagation time $t_p$ by calculating the difference between the measurement of the first pressure sensor $t_1$ and the second pressure sensor $t_2$, which corresponds to the time taken for the pressure wave to propagate along the feed line 22 between the first and second locations $L_1$, $L_2$.

Thus, the determination module 40 is arranged to calculate the effective speed C of the pressure wave in the feed line 22 according to equation E5, below:

$$C = \frac{(L_2 - L_1)}{(t_2 - t_1)} = \frac{L}{t_p} \; (ms^{-1}) \qquad\qquad (E5)$$

The diagnostic module 42 is further arranged to determine a physical parameter of the DEF in the delivery system 112 based on the wave propagation time $t_p$. In particular, the diagnostic module 42 is arranged to determine the fluid density $\rho$ of the DEF using equation E2.

A particular advantage of the DEF delivery system 112, according to the presently described embodiment, is that both the first and the second input signals are derived from pressure sensor information which relates directly to the DEF which is flowing through the feed line 22. Consequently, the controller 36 is able to determine the physical parameter of the DEF in the feed line 22 with greater accuracy and precision than the invention according to the first embodiment, as described with respect to Figure 1.

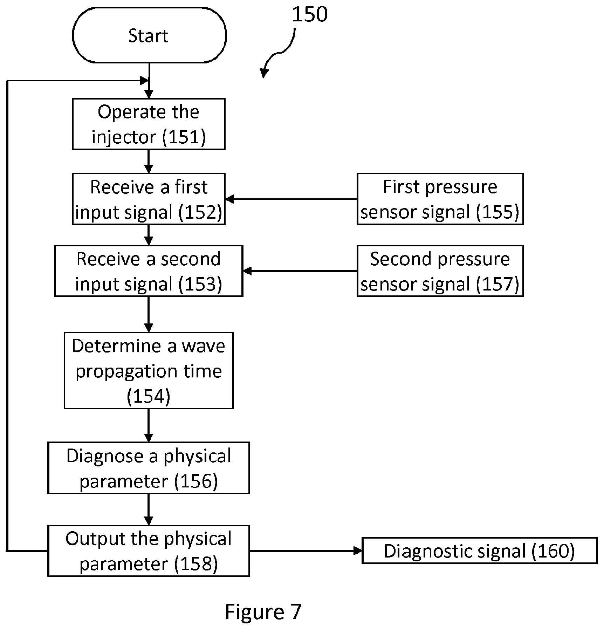

An alternative diagnostic control strategy, as executed by the controller 36 of the DEF delivery system 112, will now be described with reference to Figure 7. The control strategy is primarily directed towards diagnosing a physical parameter of the DEF in the DEF delivery system 12. The strategy comprises a computer implemented control method 150 according to an embodiment of the invention.

In a first step 151 of the control method 150, an injector command module 49 of the controller 36 of the DEF delivery system 112 is arranged to determine an injector control signal which is configured to operate the injector 24 to deliver DEF into the vehicle exhaust after-treatment system 10.

In a second step 152, the injector command module 49 is arranged receive a first input signal 155 from the first pressure sensor 131 of the DEF delivery system 112. The pressure sensor information contained within the first input signal 155 is indicative of the timing of the pressure wave at the second location $L_1$ of the feed line 22.

In a third step 153, the second input 46 receives a second input signal 157 from the second pressure sensor 130 of the DEF delivery system 12, wherein the pressure sensor information contained within the second input signal 157 is indicative of the timing of the pressure wave at the second location $L_2$ of the feed line 22

In a fourth step 154, the determination module 40 determines a wave propagation time $t_p$ by calculating the difference between the timings of the pressure wave at the first and second locations $L_1$, $L_2$ in the feed line 22. The propagation time $t_p$ is representative of the time it takes for the pressure wave to propagate between the first and the second locations $L_1$, $L_2$ in the feed line 22. The determination module 40 then calculates the effective speed C of the pressure wave according to equation E3 above.

In a penultimate step 156, the diagnostic module 42 calculates the fluid density $\rho$ of the DEF in the feed line 22 based on the effective speed C of the pressure wave, as determined with respect to the wave propagation time $t_p$.

In a final step 158, the diagnostic module 42 determines a diagnostic signal 160 which is outputted by the output 42 to a display of the vehicle. The diagnostic signal 160 is based on the DEF fluid density $\rho$ parameter, which was determined in the previous method step 156.

The examples described herein are representative only and the skilled reader will appreciate other specific architectures are possible. Moreover, the components of the DEF delivery system and the vehicle exhaust system are conventional and as such would be familiar to the skilled reader. For example, the diagram of Figure 1 should be taken as a representation of an exemplary DEF delivery system 12, only. Alternative configurations of DEF delivery systems are known and it is expected that other known components may be incorporated in addition to or as alternatives to the components shown in and described with reference to Figure 1. Such changes would be within the capabilities of the skilled person. In particular, additional components arranged to cool the injector would be expected to be incorporated in the DEF delivery system depending upon the location of the injector 24 with respect to the vehicle exhaust.

Furthermore, the determination module 40 and the diagnostic module 42 are each provided as algorithmic instances on a processor of the controller 36. The processor is arranged to carry out the functions of each module in response to a suitable demand or instruction. Alternatively, each of the controller's modules 40, 42 and 49 may be provided within any number of separate physical processing units, as would be readily understood by the skilled person.

It will also be appreciated that suitable connection apparatus may be provided to interconnect the controller 36 and the various components of the DEF delivery system 12. The interconnections may be direct or 'point to point' connections, or may be part of a local area network (LAN) operated under a suitable protocol (CANbus or Ethernet for example). Also, it should be appreciated that rather than using cabling, the control commands may be transmitted wirelessly over a suitable wireless network, for example operating under WiFi™ or ZigBee™ standards (IEEE802.11 and 802.15.4 respectively).

List of references

Vehicle exhaust after-treatment system 10

DEF delivery system 12, 112
SCR system 14
Source tank 20
Feed line 22
Injector 24
Pump assembly 26
Hydraulic pump 28
Pressure sensor 30
First pressure sensor 131
Second pressure sensor 130
Filter 32
Return line 34
Controller 36
Determination module 40
Diagnostic module 42
First input 44
Second input 46
Output 48
Injector command module 49
Control method 50, 150
First input signal 55, 155
Second input signal 57, 157
Diagnostic signal 62, 160

## Claims

1. A method of diagnosing a physical parameter of diesel emission fluid (DEF) in a DEF delivery system (12, 112), the DEF delivery system (12, 112) comprising an injector (24) for injecting DEF into a vehicle exhaust after-treatment system (10), a conduit (22) which connects the injector (24) to a source of DEF (20), and a pump assembly (26) arranged to pump DEF from the DEF source (20) into the conduit; the method comprising:

   operating the injector (24) to inject DEF into the vehicle exhaust after-treatment system (10);
   receiving a first input signal (55) indicative of a pressure wave being at a first location (L1) in the conduit, the pressure wave resulting from an operation of the injector (24), wherein the first input signal (55) comprises information relating to the operation of the injector (24);
   receiving a second input signal (57) from a pressure sensor of the pump assembly (26) indicative of the pressure wave being at a second location (L2) in the conduit which is downstream, in the direction of the pressure wave, from the first location (L1), wherein the pressure sensor of the pump assembly (26) is arranged at the second location (L2) along the conduit;
   determining a wave propagation time indicative of the time it takes for the pressure wave to propagate from the first location (L1) to the second location (L2); and
   diagnosing a physical parameter of the DEF in the delivery system (12, 112) based on the wave propagation time;
   wherein the step of determining the wave propagation time comprises:

   determining the timing of an injection of DEF into the exhaust after-treatment system (10) by the injector (24) based on the first input signal (55); and,
   determining when the resulting pressure wave will arrive at the first location (L1) following the operation of the injector (24) based on a pre-determined calibration value which corresponds to the time difference (d) between the initiation of the injection at $t_{inject}$ and the formation of the pressure wave at $t_1$.

2. A method according to claim 1, wherein the first input signal (55, 155) comprises information relating to a pressure sensor arranged at the first location (L1) along the conduit.

3. A method according to claim 2, wherein the first location (L1) is arranged Upstream from the injector (24), relative to the general direction of the flow.

4. A method according to any preceding claim, wherein the step of diagnosing the physical parameter of the DEF in the

EP 3 980 630 B1

delivery system (12, 112) comprises determining the fluid density value of the DEF in the conduit based on the wave propagation time.

5. A method according to any preceding claim, wherein the method comprises diagnosing the physical parameter of the DEF based on a physical parameter of the conduit.

6. A method according to claim 5, wherein the physical parameter of the conduit relates to at least one of a diameter, a wall thickness and a Young's modulus of the conduit.

7. A method according to any preceding claim, wherein the method comprises diagnosing the physical parameter of the DEF based on the bulk modulus of the DEF in the DEF delivery system (12, 112).

8. A diesel emission fluid (DEF) delivery system controller for diagnosing a physical parameter of DEF in a DEF delivery system (12, 112), the system comprising an injector (24) for injecting DEF into a vehicle exhaust after-treatment system (10), a conduit which connects the injector (24) to a source of DEF (20), and a pump assembly (26) arranged to pump DEF from the DEF source (20) into the conduit; the controller (36) comprising:

a first input (42) arranged to receive a first input signal indicative of a pressure wave being at a first location in the conduit, the pressure wave resulting from the operation of the injector (24), wherein the first input signal (55) comprises information relating to the operation of the injector (24);
a second input (44) arranged to receive a second input signal (57) from a pressure sensor of the pump assembly (26) indicative of the pressure wave being at a second location in the conduit which is downstream, in the direction of the pressure wave, from the first location;
a determination module (40) arranged to determine a wave propagation time indicative of the time it takes for the pressure wave to propagate from the first location to the second location, wherein the determination module is arranged to determine when the wave arrives at the first location based on a predetermined calibration value;
a diagnostic module (42) arranged to determine a physical parameter of the DEF in the delivery system (12, 112) based on the wave propagation time; and,
an output (48) arranged to output a diagnostic signal based on the DEF physical parameter.

**Patentansprüche**

1. Verfahren zur Diagnose eines physikalischen Parameters von Dieselemissionsfluid (Diesel Emission Fluid, DEF) in einem DEF-Zufuhrsystem (12, 112), wobei das DEF-Zufuhrsystem (12, 112) eine Einspritzdüse (24) zum Einspritzen von DEF in ein Fahrzeugabgasnachbehandlungssystem (10), eine Leitung (22), die die Einspritzdüse (24) mit einer DEF-Quelle (20) verbindet, und eine Pumpenbaugruppe (26) umfasst, die angeordnet ist, um DEF von der DEF-Quelle (20) in die Leitung zu pumpen; wobei das Verfahren Folgendes umfasst:

Betätigen der Einspritzdüse (24), um DEF in das Fahrzeugabgasnachbehandlungssystem (10) einzuspritzen;
Empfangen eines ersten Eingangssignals (55), das angibt, dass sich eine Druckwelle an einer ersten Stelle (L1) in der Leitung befindet, wobei die Druckwelle aus einer Betätigung der Einspritzdüse (24) resultiert, wobei das erste Eingangssignal (55) Informationen umfasst, die sich auf die Betätigung der Einspritzdüse (24) beziehen;
Empfangen eines zweiten Eingangssignals (57) von einem Drucksensor der Pumpenbaugruppe (26), das angibt, dass sich die Druckwelle an einer zweiten Stelle (L2) in der Leitung befindet, die in Richtung der Druckwelle stromabwärts von der ersten Stelle (L1) liegt, wobei der Drucksensor der Pumpenbaugruppe (26) an der zweiten Stelle (L2) entlang der Leitung angeordnet ist;
Bestimmen einer Wellenausbreitungszeit, die die Zeit angibt, die die Druckwelle benötigt, um sich von der ersten Stelle (L1) zur zweiten Stelle (L2) auszubreiten; und
Diagnostizieren eines physikalischen Parameters des DEF in dem Zufuhrsystem (12, 112) basierend auf der Wellenausbreitungszeit;
wobei der Schritt des Bestimmens der Wellenausbreitungszeit Folgendes umfasst:

Bestimmen des Zeitpunkts einer Einspritzung von DEF durch die Einspritzdüse (24) in das Abgasnachbehandlungssystem (10) basierend auf dem ersten Eingangssignal (55); und
Bestimmen, wann die resultierende Druckwelle nach der Betätigung der Einspritzdüse (24) an der ersten Stelle (L1) eintreffen wird, basierend auf einem vorbestimmten Kalibrierungswert, der der Zeitdifferenz (d) zwischen dem Einleiten der Einspritzung zum Zeitpunkt $t_{inject}$ und der Bildung der Druckwelle zum Zeitpunkt

t$_1$ entspricht.

**2.** Verfahren nach Anspruch 1, wobei das erste Eingangssignal (55, 155) Informationen umfasst, die sich auf einen Drucksensor beziehen, der an der ersten Stelle (L1) entlang der Leitung angeordnet ist.

**3.** Verfahren nach Anspruch 2, wobei die erste Stelle (L1) in Bezug auf die allgemeine Strömungsrichtung stromaufwärts von der Einspritzdüse (24) angeordnet ist.

**4.** Verfahren nach einem der vorstehenden Ansprüche, wobei der Schritt des Diagnostizierens des physikalischen Parameters des DEF in dem Zufuhrsystem (12, 112) das Bestimmen des Fluiddichtewertes des DEF in der Leitung basierend auf der Wellenausbreitungszeit umfasst.

**5.** Verfahren nach einem der vorstehenden Ansprüche, wobei das Verfahren das Diagnostizieren des physikalischen Parameters des DEF basierend auf einem physikalischen Parameter der Leitung umfasst.

**6.** Verfahren nach Anspruch 5, wobei sich der physikalische Parameter der Leitung auf mindestens eines von einem Durchmesser, einer Wanddicke und einem Elastizitätsmodul der Leitung bezieht.

**7.** Verfahren nach einem der vorstehenden Ansprüche, wobei das Verfahren das Diagnostizieren des physikalischen Parameters des DEF basierend auf dem Kompressionsmodul des DEF in dem DEF-Zufuhrsystem (12, 112) umfasst.

**8.** Steuergerät für ein Dieselemissionsfluid-Zufuhrsystem (DEF-Zufuhrsystem) zur Diagnose eines physikalischen Parameters von DEF in einem DEF-Zufuhrsystem (12, 112), wobei das System eine Einspritzdüse (24) zum Einspritzen von DEF in ein Fahrzeugabgasnachbehandlungssystem (10), eine Leitung, die die Einspritzdüse (24) mit einer DEF-Quelle (20) verbindet, und eine Pumpenbaugruppe (26) umfasst, die angeordnet ist, um DEF von der DEF-Quelle (20) in die Leitung zu pumpen; wobei das Steuergerät (36) Folgendes umfasst:

einen ersten Eingang (42), der angeordnet ist, um ein erstes Eingangssignal zu empfangen, das angibt, dass sich eine Druckwelle an einer ersten Stelle in der Leitung befindet, wobei die Druckwelle aus der Betätigung der Einspritzdüse (24) resultiert, wobei das erste Eingangssignal (55) Informationen umfasst, die sich auf die Betätigung der Einspritzdüse (24) beziehen;
einen zweiten Eingang (44), der angeordnet ist, um ein zweites Eingangssignal (57) von einem Drucksensor der Pumpenbaugruppe (26) zu empfangen, das angibt, dass sich die Druckwelle an einer zweiten Stelle in der Leitung befindet, die in Richtung der Druckwelle stromabwärts von der ersten Stelle liegt;
ein Bestimmungsmodul (40), das angeordnet ist, um eine Wellenausbreitungszeit zu bestimmen, die die Zeit angibt, die die Druckwelle benötigt, um sich von der ersten Stelle zur zweiten Stelle auszubreiten, wobei das Bestimmungsmodul angeordnet ist, um basierend auf einem vorbestimmten Kalibrierungswert zu bestimmen, wann die Welle an der ersten Stelle eintrifft;
ein Diagnosemodul (42), das angeordnet ist, um einen physikalischen Parameter des DEF in dem Zufuhrsystem (12, 112) basierend auf der Wellenausbreitungszeit zu bestimmen;
einen Ausgang (48), der angeordnet ist, um ein Diagnosesignal basierend auf dem physikalischen Parameter des DEF auszugeben.

**Revendications**

**1.** Procédé d'évaluation d'un paramètre physique d'un fluide d'échappement diesel (FED) dans un système de distribution de FED (12, 112), le système de distribution de FED (12, 112) comprenant un injecteur (24) servant à injecter du FED dans un système de post-traitement des gaz d'échappement (10) d'un véhicule, un conduit (22) qui relie l'injecteur (24) à une source de FED (20), et un ensemble pompe (26) conçu pour pomper du FED depuis la source de FED (20) dans le conduit ; le procédé comprenant :

actionner l'injecteur (24) de façon à ce qu'il injecte du FED dans le système de post-traitement des gaz d'échappement (10) du véhicule ;
recevoir un premier signal en entrée (55) indiquant qu'une onde de pression est présente à un premier emplacement (L1) dans le conduit, l'onde de pression découlant d'un actionnement de l'injecteur (24), le premier signal en entrée (55) comprenant des informations concernant l'actionnement de l'injecteur (24) ;
recevoir un second signal en entrée (57) provenant d'un capteur de pression de l'ensemble pompe (26) indiquant que l'onde de pression est présente à un second emplacement (L2) dans le conduit se trouvant en aval, dans le sens de l'onde de pression, relativement au premier emplacement (L1), le capteur de pression de l'ensemble pompe (26) étant placé au second emplacement (L2) le long du conduit ;

déterminer un temps de propagation de l'onde indiquant le temps requis pour que l'onde de pression se propage du premier emplacement (L1) au second emplacement (L2) ; et

évaluer un paramètre physique du FED dans le système de distribution (12, 112) en fonction du temps de propagation de l'onde ;

l'étape de détermination du temps de propagation de l'onde comprenant :

déterminer l'instant d'une injection de FED dans le système de post-traitement des gaz d'échappement (10) par l'injecteur (24) en fonction du premier signal en entrée (55) ; et

déterminer l'instant auquel l'onde de pression résultante arrivera au premier emplacement (L1) à la suite de l'actionnement de l'injecteur (24) en fonction d'une valeur d'étalonnage prédéterminée qui correspond au décalage temporel (d) entre le déclenchement de l'injection à l'instant $t_{inject}$ et la formation de l'onde de pression à l'instant $t_1$.

2. Procédé selon la revendication 1, dans lequel le premier signal en entrée (55, 155) comprend des informations concernant un capteur de pression placé au premier emplacement (L1) le long du conduit.

3. Procédé selon la revendication 2, dans lequel le premier emplacement (L1) est situé en amont de l'injecteur (24), relativement au sens général de l'écoulement.

4. Procédé selon l'une quelconque des revendications précédentes, dans lequel l'étape d'évaluation du paramètre physique du FED dans le système de distribution (12, 112) comprend la détermination de la valeur de densité de fluide du FED dans le conduit en fonction du temps de propagation de l'onde.

5. Procédé selon l'une quelconque des revendications précédentes, le procédé comprenant l'évaluation du paramètre physique du FED en fonction d'un paramètre physique du conduit.

6. Procédé selon la revendication 5, dans lequel le paramètre physique du conduit concerne au moins l'un d'un diamètre, d'une épaisseur de paroi et d'un module d'Young du conduit.

7. Procédé selon l'une quelconque des revendications précédentes, le procédé comprenant l'évaluation du paramètre physique du FED en fonction du module de compressibilité du FED dans le système de distribution de FED (12, 112).

8. Dispositif de commande pour système de distribution de fluide d'échappement diesel (FED) destiné à évaluer un paramètre physique du FED dans un système de distribution de FED (12, 112), le système comprenant un injecteur (24) servant à injecter du FED dans un système de post-traitement des gaz d'échappement (10) d'un véhicule, un conduit qui relie l'injecteur (24) à une source de FED (20), et un ensemble pompe (26) conçu pour pomper du FED depuis la source de FED (20) dans le conduit ; le dispositif de commande (36) comprenant :

un premier module d'entrée (42) conçu pour recevoir un premier signal en entrée indiquant qu'une onde de pression est présente à un premier emplacement dans le conduit, l'onde de pression découlant de l'actionnement de l'injecteur (24), le premier signal en entrée (55) comprenant des informations concernant l'actionnement de l'injecteur (24) ;

un second module d'entrée (44) conçu pour recevoir un second signal en entrée (57) provenant d'un capteur de pression de l'ensemble pompe (26) indiquant que l'onde de pression est présente à un second emplacement dans le conduit se trouvant en aval, dans le sens de l'onde de pression, relativement au premier emplacement ;

un module de détermination (40) conçu pour déterminer un temps de propagation de l'onde indiquant le temps requis pour que l'onde de pression se propage du premier emplacement au second emplacement, le module de détermination étant conçu pour déterminer l'instant auquel l'onde arrivera au premier emplacement en fonction d'une valeur d'étalonnage prédéterminée ;

un module d'évaluation (42) conçu pour déterminer un paramètre physique du FED dans le système de distribution (12, 112) en fonction du temps de propagation de l'onde ; et

un module de sortie (48) conçu pour produire un signal d'évaluation en fonction du paramètre physique du FED.

Figure 1

Figure 2

EP 3 980 630 B1

Figure 3

Figure 4

Figure 5

EP 3 980 630 B1

Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016212263 B3